# EUROPEAN PATENT APPLICATION

(11) **EP 4 787 503 A1**
(43) Date of publication of application: **05.08.2026**
(21) Application number: 24872146.6
(22) Date of filing: 24.09.2024
(51) Int. Cl.: H01M 6/06, H01M 4/38, H01M 4/42, H01M 4/46, H01M 12/06

(54) **BATTERY**

(30) Priority: 25.09.2023 JP 2023161599
(71) Applicant: Maxell, Ltd., Kyoto 618-8525 (JP)
(72) Inventor: NAKANO, Satoshi, Otokuni-gun, Kyoto 618-8525 (JP); FURUTANI, Takahiro, Otokuni-gun, Kyoto 618-8525 (JP); ONO, Hiroaki, Otokuni-gun, Kyoto 618-8525 (JP)
(74) Representative: Diehl & Partner
(86) International application number: PCT/JP2024/033853
(87) International publication number: WO 2025/070355

(57) **Abstract**

Provided is a battery that includes an aqueous electrolyte and is excellent in safety and in discharge characteristics at low temperatures. A battery according to the present invention includes a positive electrode, a negative electrode, and an electrolyte, wherein the electrolyte is an aqueous solution containing at least LiCl as an electrolyte salt, and the concentration of LiCl in the aqueous solution is 16 mass% or more. The amount of LiCl is preferably 50 parts by mass or more based on 100 parts by mass of the total amount of electrolyte salts contained in the electrolyte.

## Description

### Technical Field

The present invention relates to a battery that includes an aqueous electrolyte and is excellent in safety and in discharge characteristics at low temperatures.

### Background Art

While batteries using aqueous electrolytes, such as air batteries and alkaline batteries, have conventionally been used in large numbers, in recent years, their use as power sources for various types of body-worn sensors, such as body temperature patches, has been expanding.

Various improvements have been made to batteries including an aqueous electrolyte. For example, Patent Document 1 proposes a technology for sheet batteries in which an outer casing is composed of a polymer compound sheet, to suppress the depletion of an electrolyte due to the transpiration of moisture in the electrolyte through the sheet over time, by adding to the electrolyte, separately from an electrolyte salt, a compound whose water vapor pressure in a saturated aqueous solution at an operating temperature is equal to or lower than the atmospheric water vapor partial pressure corresponding to the atmospheric relative humidity of 40% at that temperature. Note that in the examples in Patent Document 1, lithium chloride (LiCl) and calcium chloride (CaCl₂) are used as the aforementioned compound added to the electrolyte.

Further, in batteries including an aqueous electrolyte, improvements have also been made in light of the application developments as described above, and for example, from a viewpoint of reducing environmental impact as much as possible even if a user discards a battery after replacement, attempts have been made to ensure favorable characteristics while lowering the pH of the electrolyte by using, as the electrolyte, an aqueous solution containing a salt of a strong acid and a weak base as an electrolyte salt (Patent Documents 2 and 3, for example).

### Prior Art Documents

### Patent Documents

Patent Document 1: JP H5-135778A
Patent Document 2: WO 2018/056307
Patent Document 3: WO 2020/162591

### Summary of the Invention

### Problem to be Solved by the Invention

However, in batteries using an electrolyte containing, as an electrolyte salt, a salt of a strong acid and a weak base such as ammonium chloride described in Patent Document 2 and Patent Document 3, there is a problem, for example, in that the discharge characteristics thereof are significantly impaired at low temperatures (0°C or lower, particularly -20°C or lower (for example, about -40°C)), and there is still room for improvement in this regard.

On the other hand, in manganese batteries and the like, an aqueous solution containing zinc chloride, which corresponds to the salt of a strong acid and a weak base, as an electrolyte salt is used as the electrolyte, and it has been confirmed that favorable discharge is possible even under low-temperature environments. However, since zinc chloride is a compound designated as a toxic substance, it is desirable to reduce the amount of such a compound used in the electrolyte as much as possible.

The present invention has been made in view of the above circumstances, and aims to provide a battery that includes an aqueous electrolyte and is excellent in safety and in discharge characteristics at low temperatures.

### Means for Solving Problem

A battery according to the present invention includes a positive electrode, a negative electrode, and an electrolyte, wherein the electrolyte is an aqueous solution containing at least LiCl as an electrolyte salt, and the concentration of LiCl in the aqueous solution is 16 mass% or more.

### Effects of the Invention

According to the present invention, it is possible to provide a battery that includes an aqueous electrolyte and is excellent in safety and in discharge characteristics at low temperatures.

### Brief Description of Drawings

[FIG. 1] FIG. 1 is a plan view schematically showing an example of a battery according to the present invention.
[FIG. 2] FIG. 2 is a cross-sectional view taken along a line I-I shown in FIG. 1.
[FIG. 3] FIG. 3 is a graph showing evaluation results of low-temperature discharge characteristics of batteries according to Examples and Comparative Examples.
[FIG. 4] FIG. 4 is a graph showing evaluation results of low-temperature discharge characteristics of batteries according to Examples.

### Description of the Invention

In batteries including, as an electrolyte, an aqueous solution containing a salt of a strong acid and a weak base such as ammonium chloride as an electrolyte salt, the pH of the electrolyte is low and the batteries have favorable discharge characteristics. However, even in such batteries, sufficient discharge characteristics cannot be ensured under low-temperature environments of 0°C or lower, particularly -20°C or lower (for example, about -40°C) because the electrolyte salt precipitates or the aqueous solution freezes depending on the type of the electrolyte salt.

On the other hand, in manganese batteries or the like using manganese oxide for a positive electrode, an aqueous solution containing zinc chloride as an electrolyte salt is used as an electrolyte, and in such batteries, favorable discharge can be performed even under the aforementioned low-temperature environments. However, since zinc chloride is a toxic substance, there is room for improvement in terms of safety, such as when the electrolyte leaks and adheres to the human body.

Therefore, in the present invention, an aqueous solution containing at least LiCl as an electrolyte salt at a certain concentration or higher is used as the electrolyte. This makes it possible to ensure discharge characteristics at or above a certain level at low temperatures, and further makes it possible to adopt an electrolyte configuration containing no zinc chloride or having a reduced content thereof, thereby enhancing safety.

The battery according to the present invention can be embodied as various types of batteries (manganese batteries, silver oxide batteries, air batteries, etc.) including an aqueous electrolyte, that is, an electrolyte composed of an aqueous solution using water as a solvent.

### (Aqueous Electrolyte)

The battery according to the present invention includes, as an aqueous electrolyte, an aqueous solution containing at least LiCl as an electrolyte salt at a concentration of 16 mass% or more.

The aqueous electrolyte contains LiCl at a high concentration, thereby allowing the battery to exhibit favorable load characteristics even when placed at low temperatures. Furthermore, when an aqueous electrolyte containing LiCl as an electrolyte salt is used, for example, corrosion of a negative electrode by the aqueous electrolyte and the accompanying gas generation within the battery can be favorably suppressed. Therefore, in the battery according to the present invention, the occurrence of problems such as liquid leakage that can be caused by internally generated gas can also be favorably suppressed.

The concentration of LiCl in the aqueous electrolyte is 16 mass% or more, preferably 20 mass% or more, and more preferably 25 mass% or more. Further, from the viewpoint of preventing salt precipitation and more effectively enhancing the low-temperature discharge characteristics (especially load characteristics) of the battery, the concentration of LiCl in the aqueous electrolyte is preferably 45 mass% or less, more preferably 40 mass% or less, and particularly preferably 35 mass% or less.

Note that the aqueous electrolyte may contain an electrolyte salt other than LiCl, but if the concentration of the electrolyte salt other than LiCl increases, it may become difficult to increase the concentration of LiCl, and it may become difficult to enhance the low-temperature load characteristics of the battery. Therefore, the amount of LiCl is preferably 50 parts by mass or more, more preferably 70 parts by mass or more, and particularly preferably 80 parts by mass or more, based on 100 parts by mass of the total amount of electrolyte salts contained in the aqueous electrolyte. Since the aqueous electrolyte may contain only LiCl as an electrolyte salt, the upper limit of the amount of LiCl is 100 parts by mass based on 100 parts by mass of the total amount of electrolyte salts contained in the aqueous electrolyte.

Examples of electrolyte salts other than LiCl that can be used in the aqueous electrolyte include: chlorides such as sodium chloride, potassium chloride, magnesium chloride, calcium chloride, ammonium chloride, and zinc chloride; hydroxides of alkali metals or alkaline earth metals (sodium hydroxide, potassium hydroxide, magnesium hydroxide, etc.), acetates thereof (sodium acetate, potassium acetate, magnesium acetate, etc.), nitrates thereof (sodium nitrate, potassium nitrate, magnesium nitrate, etc.), sulfates thereof (sodium sulfate, potassium sulfate, magnesium sulfate, etc.), phosphates thereof (sodium phosphate, potassium phosphate, magnesium phosphate, etc.), borates thereof (sodium borate, potassium borate, magnesium borate, etc.), citrates thereof (sodium citrate, potassium citrate, magnesium citrate, etc.), and glutamates thereof (sodium glutamate, potassium glutamate, and magnesium glutamate, etc.); bicarbonates of alkali metals (sodium bicarbonate, potassium bicarbonate, etc.); percarbonates of alkali metals (sodium percarbonate, potassium percarbonate, etc.); halogen-containing compounds such as fluorides; polycarboxylic acids; and the like, and one or more thereof can be used.

Among the electrolyte salts exemplified above, the electrolyte salt used in combination with LiCl is preferably at least one selected from the group consisting of ammonium chloride, zinc chloride, hydroxides of alkali metals, and hydroxides of alkaline earth metals, and more preferably ammonium chloride. By using ammonium chloride together with LiCl as electrolyte salts, the effect of increasing the open-circuit voltage (OCV) and the closed-circuit voltage (CCV) of the battery can be expected when the battery is used at room temperature. Further, it is more preferable to use zinc chloride together with LiCl as electrolyte salts, and thereby the effect of further improving the characteristics of the battery can be expected at low temperatures.

When ammonium chloride or zinc chloride is used, it may be contained such that the ratio relative to LiCl falls within the aforementioned range; however, zinc chloride is a toxic substance and therefore the content thereof is preferably as low as possible. In typical manganese batteries, an electrolyte containing about 30 mass% zinc chloride is used; however, in the present invention, from the viewpoint of safety, the concentration of zinc chloride in the aqueous electrolyte is preferably 15 mass% or less, more preferably 10 mass% or less, and still more preferably 5 mass% or less, and zinc chloride may be absent. Further, from the viewpoint of more effectively ensuring the aforementioned effect obtained by using ammonium chloride in the aqueous electrolyte, the amount of ammonium chloride is preferably 0.5 parts by mass or more, more preferably 5 parts by mass or more, and still more preferably 10 parts by mass or more, based on 100 parts by mass of the total amount of electrolyte salts contained in the aqueous electrolyte. Furthermore, the amount of ammonium chloride is preferably 20 parts by mass or less based on 100 parts by mass of the total amount of electrolyte salts contained in the aqueous electrolyte.

When the battery is an air battery, a problem of variation in the electrolyte composition is likely to occur due to evaporation of water in the aqueous electrolyte and dissipation thereof through air holes. Therefore, from the viewpoint of avoiding such a problem, a water-soluble high-boiling solvent having a boiling point of 150°C or higher (preferably 320°C or lower) may be used together with water as a solvent for the aqueous electrolyte, or a thickener may be incorporated into the aqueous electrolyte composed of an aqueous solution [more preferably, the aqueous electrolyte may be in the form of a gel (gel electrolyte)].

Examples of the water-soluble high-boiling solvent include: polyhydric alcohols such as ethylene glycol (boiling point 197°C), propylene glycol (boiling point 188°C), and glycerin (boiling point 290°C); polyalkylene glycols (preferably having a molecular weight of 600 or less) such as polyethylene glycol (PEG; e.g., boiling point 230°C); and the like. When the water-soluble high-boiling solvent is used, the proportion thereof relative to the total solvent is preferably 3 to 30 mass%.

Further, in a battery having a negative electrode using a metal sheet (metal foil) that acts as a negative electrode active material as described later, when an aqueous electrolyte composed of an aqueous solution is used, there is a risk that corrosion caused by the aqueous electrolyte will lead to problems such as negative electrode breakage and insufficient capacity. When LiCl is used as the electrolyte salt for the aqueous electrolyte, as described above, it is possible to suppress corrosion of the negative electrode; however, when a thickener is incorporated into the aqueous electrolyte, and more preferably when the electrolyte is in a gel form (gel electrolyte), in addition to avoiding the aforementioned problem of variation in the electrolyte composition, unnecessary corrosion reactions of the negative electrode can be further suppressed, and the accompanying gas generation and negative electrode breakage can be further suppressed. Examples of the thickener that can be incorporated into the aqueous electrolyte include various synthetic polymers and natural polymers, such as: cellulose derivatives such as carboxymethyl cellulose (CMC) and carboxyethyl cellulose (CEC); polyalkylene oxides (preferably having a molecular weight of 1000 or more, and more preferably 10000 or more) such as polyethylene oxide (PEO); polyvinylpyrrolidone; polyvinyl acetate; starch; guar gum; xanthan gum; sodium alginate; hyaluronic acid; gelatin; polyacrylic acid; polymers and copolymers of acrylamide; and the like. Furthermore, among the thickeners exemplified above, when one having a functional group composed of a carboxyl group or a salt thereof (-COOH, -COONa, etc.) in the molecule is used, it is also preferable to incorporate a polyvalent metal salt that acts as a gelation accelerator into the aqueous electrolyte. The amount of thickener incorporated into the aqueous electrolyte is preferably 0.1 mass% or more, more preferably 1 mass% or more, and still more preferably 3 mass% or more, in order to enhance the aforementioned effects, and is preferably 20 mass% or less, more preferably 15 mass% or less, and still more preferably 10 mass% or less, in order to prevent deterioration of discharge characteristics. Further, when a gelation accelerator is used, the proportion of the gelation accelerator is preferably 1 to 30 parts by mass when the proportion of the thickener is taken as 100 parts by mass.

Further, the aqueous electrolyte may be made into a gel form (gel electrolyte) using a gelling agent such as a known polymer or the like.

The pH of the aqueous electrolyte is not particularly limited, but is preferably 3 or higher, and more preferably 4 or higher, in order to prevent corrosion of the negative electrode active material. On the other hand, when constructing an air battery, the pH of the aqueous electrolyte is preferably 8 or lower, more preferably 7 or lower, and still more preferably 6 or lower, in order to prevent carbon dioxide in the air from being incorporated into the electrolyte. The pH of the aqueous electrolyte can be adjusted by using a combination of a salt of a weak acid and a strong base, or a salt of a strong acid and a weak base. Further, the pH of the aqueous electrolyte can be adjusted to a lower value by including a weak acid such as carboxylic acid, carbonic acid, or phosphoric acid in the electrolyte.

### (Negative Electrode)

For the negative electrode, for example, a negative electrode having, as an active material, at least one metal selected from the group consisting of zinc, aluminum, magnesium, and alloys thereof is used.

As a specific example of such a negative electrode, a metal sheet composed of any of the aforementioned materials (zinc foil, zinc alloy foil, magnesium foil, magnesium alloy foil, aluminum foil, and aluminum alloy foil) is preferably used. The thickness of the metal sheet is preferably 5 to 1000 µm.

Further, metal particles composed of any of the aforementioned materials (zinc particles, zinc alloy particles, magnesium particles, magnesium alloy particles, aluminum particles, and aluminum alloy particles) can also be used.

Examples of alloying components of the zinc alloy include indium, bismuth, aluminum, and the like, and one or more of the aforementioned elements can be contained.

The content of each alloying component in the zinc alloy is, for example, as follows. The content of indium is, for example, 0.005% or more and 0.1% or less on a mass basis. The content of bismuth is, for example, 0.002% or more and 0.2% or less on a mass basis. The content of aluminum is, for example, 0.0001% or more and 0.15% or less on a mass basis.

Note that the zinc foil and the zinc alloy foil may be electrolytic foil or rolled foil, and electrolytic foil is preferably used because electrolytic foil is less likely to generate gas due to reactions with the electrolyte in the battery, and in particular, electrolytic zinc alloy foil containing bismuth is more preferably used. A preferred range of the content of bismuth in the electrolytic zinc alloy foil is 0.02% or more and 0.1% or less on a mass basis.

Further, examples of alloying components of the magnesium alloy include calcium, manganese, zinc, aluminum, and the like, and one or more of the aforementioned elements can be contained.

The content of each alloying component in the magnesium alloy is, for example, as follows. The content of calcium is, for example, 1% or more and 3% or less on a mass basis. The content of manganese is, for example, 0.1% or more and 0.5% or less on a mass basis. The content of zinc is, for example, 0.4% or more and 1% or less on a mass basis. The content of aluminum is, for example, 8% or more and 10% or less on a mass basis.

Furthermore, examples of alloying components of the aluminum alloy include zinc, tin, gallium, silicon, iron, magnesium, manganese, and the like, and one or more of the aforementioned elements can be contained.

The content of each alloying component in the aluminum alloy is, for example, as follows. The content of zinc is, for example, 0.5% or more and 10% or less on a mass basis. The content of tin is, for example, 0.04% or more and 1.0% or less on a mass basis. The content of gallium is, for example, 0.003% or more and 1.0% or less on a mass basis. The content of silicon is, for example, 0.05% or less on a mass basis. The content of iron is, for example, 0.1% or less on a mass basis. The content of magnesium is, for example, 0.1% or more and 2.0% or less on a mass basis. The content of manganese is, for example, 0.01% or more and 0.5% or less on a mass basis.

In the case of a negative electrode containing metal particles, the metal particles may be of a single type or a combination of two or more types.

Note that, considering the reduction of the environmental load upon disposal of the battery, it is preferable that the metal material used for the negative electrode has a low content of mercury, cadmium, lead, and chromium, and more preferably, the content of mercury is 0.1% or less, the content of cadmium is 0.01% or less, the content of lead is 0.1% or less, and the content of chromium is 0.1% or less on a mass basis.

Regarding the particle size of the zinc particles and the zinc alloy particles, for example, it is preferable that the proportion of particles having a particle size of 75 µm or less is 50 mass% or less, and more preferably 30 mass% or less, and the proportion of particles having a particle size of 100 to 200 µm is 50 mass% or more, and more preferably 90 mass% or more, based on the total particles.

Further, regarding the particle size of the magnesium particles, the magnesium alloy particles, the aluminum particles, and the aluminum alloy particles, for example, it is preferable that the proportion of particles having a particle size of 30 µm or less is 50 mass% or less, and more preferably 30 mass% or less, and the proportion of particles having a particle size of 50 to 200 µm is 50 mass% or more, and more preferably 90 mass% or more, based on the total particles.

The particle size of the metal particles referred to herein is a particle size (D50) at a cumulative frequency of 50% on a volume basis, measured by dispersing the particles in a medium that does not dissolve the particles and using a laser scattering particle size distribution analyzer (for example, "LA-920" manufactured by HORIBA, Ltd.).

In the case of a negative electrode containing the aforementioned metal particles, a gelling agent (sodium polyacrylate, carboxymethylcellulose, etc.) or a binder may be included as necessary to form a mixture, and a negative electrode mixture (a gelled negative electrode, etc.) formed by adding an electrolyte thereto can be used. For example, the amount of the gelling agent in the negative electrode is preferably 0.5 to 1.5 mass%, and the amount of the binder is preferably 0.5 to 3 mass%.

For the electrolyte related to the negative electrode containing metal particles, the same one as that injected into the battery can be used.

For example, the content of the metal particles in the negative electrode is preferably 60 mass% or more and more preferably 65 mass% or more, and preferably 95 mass% or less and more preferably 90 mass% or less.

It is preferable that the negative electrode containing metal particles contains an indium compound. By the negative electrode containing an indium compound, hydrogen gas generation due to corrosion reactions between the metal particles and the electrolyte can be more effectively prevented.

Examples of the aforementioned indium compound include indium oxide, indium hydroxide, and the like.

The amount of the indium compound used for the negative electrode is preferably 0.003 to 1 by mass with respect to 100 parts by mass of the metal particles.

In addition, a current collector may be used as necessary for the negative electrode containing metal material. Examples of the current collector for the negative electrode containing a metal material include: meshes, foils, expanded metals, and punched metals of metals such as nickel, copper, and stainless steel; carbon sheets and meshes; and the like. The thickness of the current collector for the negative electrode is preferably 10 µm or more and 300 µm or less.

In addition, similarly to the case of the aforementioned positive electrode, the current collector for the negative electrode can be used with carbon paste applied to a surface intended to be an inner surface of a sheet-like outer casing. The thickness of the aforementioned carbon paste layer is preferably 50 to 200 µm.

For the negative electrode terminal portion for connection with devices to which the battery is applied, for example, a foil (plate, sheet), a wire, or the like composed of any of the metals or carbon previously exemplified as materials that can constitute the negative electrode current collector can be used. When the negative electrode terminal portion is a foil (plate, sheet), the thickness thereof is preferably 20 µm or more and 500 µm or less. Further, when the negative electrode terminal portion is a wire, the diameter thereof is preferably 50 µm or more and 1500 µm or less.

Further, a part of the current collector for the negative electrode can also be used as the terminal portion. Furthermore, when the negative electrode is composed of a metal sheet, a negative electrode having a body portion and a terminal portion can also be formed from a single metal sheet by cutting the metal sheet into a shape having a body portion functioning as a negative electrode active material layer and a terminal portion.

### (Positive Electrode)

In the case where the battery is a manganese battery or a silver oxide battery, for the positive electrode thereof, for example, a structure having a positive electrode mixture layer containing a positive electrode active material, a conductive additive, and a binder on one surface or both surfaces of a current collector, a molded body obtained by molding a positive electrode mixture containing a positive electrode active material, a conductive additive, and a binder, or the like can be used.

In the case where the battery is a manganese battery, manganese oxide such as manganese dioxide is used for the positive electrode active material thereof. In addition, in the case where the battery is a silver oxide battery, silver-containing oxide such as silver oxide (silver(I) oxide, silver(II) oxide, etc.) or silver-nickel composite oxide is used for the positive electrode active material thereof. Note that in order to enhance the load characteristics of the battery, the silver-containing oxide is preferably in a granular form. Examples of the conductive additive available for the positive electrode mixture include carbon materials such as: carbon blacks such as acetylene black, Ketjenblack, channel black, furnace black, lamp black, and thermal black; carbon fibers; and the like, as well as conductive fibers such as metal fibers; carbon fluoride; metal powders such as copper and nickel; organic conductive materials such as polyphenylene derivatives; and the like.

Examples of the binder for the positive electrode mixture include polyvinylidene fluoride (PVDF), polytetrafluoroethylene (PTFE), styrene-butadiene rubber (SBR), carboxymethyl cellulose (CMC), polyvinylpyrrolidone (PVP), and the like.

Regarding the composition in the positive electrode mixture, the amount of the positive electrode active material is preferably 80 to 98 mass%, the content of the conductive additive is preferably 1.5 to 10 mass%, and the content of the binder is preferably 0.5 to 10 mass%. Further, in the case of a positive electrode having a positive electrode mixture layer and a current collector, the thickness of the positive electrode mixture layer (thickness per one side of the current collector) is preferably 30 to 300 µm. Furthermore, in the case of a positive electrode having a molded body of a positive electrode mixture, the thickness of the molded body of the positive electrode mixture is preferably 0.2 to 0.25 mm.

The positive electrode having a positive electrode mixture layer can be manufactured, for example, through a process of preparing a positive electrode mixture-containing composition (a slurry, a paste, etc.) by dispersing a positive electrode active material, a conductive additive, a binder, and the like in water or an organic solvent such as N-methyl-2-pyrrolidone (NMP) (the binder may be dissolved in the solvent), applying this composition onto a current collector and drying it, and performing a pressing treatment such as a calendering treatment as necessary. Further, in the case of a positive electrode having a molded body of a positive electrode mixture, the positive electrode can be manufactured, for example, by pressuremolding the positive electrode mixture, or by pressure-bonding the molded body of the positive electrode mixture thus obtained to a current collector.

Further, for the positive electrode (air electrode) in the case where the battery is an air battery, a positive electrode having a catalyst layer, for example, a positive electrode having a structure in which a catalyst layer and a current collector are laminated, can be used.

The catalyst layer can include a catalyst, a binder, and the like.

Examples of the catalyst for the catalyst layer include: phthalocyanine-based metal complexes; silver, platinum group metals, or alloys thereof; transition metals; platinum/metal oxides such as Pt/IrO₂; perovskite oxides such as La₁₋ₓCaₓCoO₃; carbides such as WC; nitrides such as Mn₄N; manganese oxides such as manganese dioxide; carbon [graphite, carbon black (acetylene black, Ketjenblack, channel black, furnace black, lamp black, thermal black, etc.), charcoal, activated carbon, and the like]; and the like, and one or more thereof are used.

Further, the content of heavy metals in the catalyst layer is preferably 1 mass% or less. Batteries can be easily destroyed by tearing with hands or the like at the time of disposal depending on the form thereof, and in the case of a positive electrode having a catalyst layer in which the content of heavy metals is low as described above, a battery with a small environmental load can be provided even if the battery is disposed of without undergoing a special treatment or the like.

The content of heavy metals in the catalyst layer as referred to herein can be measured by X-ray fluorescence analysis. For example, the content can be measured using an X-ray fluorescence analyzer "ZSX100e" manufactured by Rigaku Corporation under conditions of an excitation source: Rh 50 kV and an analysis area: φ10 mm.

Therefore, as the catalyst for the catalyst layer, a catalyst containing no heavy metals is recommended, and it is more preferable to use the various types of carbon described above.

Further, from the viewpoint of further increasing the reactivity of the positive electrode, the specific surface area of the carbon used as the catalyst is preferably 200 m²/g or more, more preferably 300 m²/g or more, and still more preferably 500 m²/g or more. The specific surface area of the carbon as referred to herein is a value determined by a BET method compliant with Japanese Industrial Standards (JIS) K 6217, and can be measured, for example, using a specific surface area measuring apparatus employing a nitrogen adsorption method ("Macsorb HM model-1201" manufactured by Mountech Co., Ltd.). Note that the upper limit of the specific surface area of carbon is typically about 2000 mm²/g.

The content of the catalyst in the catalyst layer is preferably 20 to 70 mass%.

Examples of the binder for the catalyst layer include fluororesin binders such as PVDF, PTFE, copolymers of vinylidene fluoride, and copolymers of tetrafluoroethylene [vinylidene fluoride-hexafluoropropylene copolymer (PVDF-HFP), vinylidene fluoride-chlorotrifluoroethylene copolymer (PVDF-CTFE), vinylidene fluoride-tetrafluoroethylene copolymer (PVDF-TFE), vinylidene fluoride-hexafluoropropylene-tetrafluoroethylene copolymer (PVDF-HFP-TFE), etc.], and the like. Among these, a polymer of tetrafluoroethylene (PTFE) or a copolymer thereof is preferable, and PTFE is more preferable. The content of the binder in the catalyst layer is preferably 3 to 50 mass%.

In the case of a positive electrode having a catalyst layer, the positive electrode can be manufactured, for example, by mixing the aforementioned catalyst, a binder, and the like with water, rolling the mixture with a roller, and bringing the mixture into close contact with a current collector. Alternatively, the positive electrode can be manufactured through steps of applying a catalyst layer-forming composition (a slurry, a paste, etc.) prepared by dispersing the aforementioned catalyst and an optionally used binder in water or an organic solvent onto the surface of a current collector, drying it, and thereafter performing press treatment such as calendering as necessary.

In addition, a porous carbon sheet composed of fibrous carbon, such as carbon paper, carbon cloth, or carbon felt, can also be used as the catalyst layer. The carbon sheet can be used as a positive electrode current collector, which will be described later, or can serve as both.

For the current collector for the positive electrode having a positive electrode mixture layer or the positive electrode having a catalyst layer, for example, a mesh, foil, expanded metal, or punching metal of a metal such as titanium, nickel, stainless steel, or copper; a carbon mesh or sheet; or the like can be used. Note that when a current collector having pores is used, the constituent components of the positive electrode mixture layer or the constituent components of the catalyst layer may be held in the pores of the current collector, whereby the positive electrode mixture layer or catalyst layer and the current collector are integrated. The thickness of the current collector for the positive electrode is preferably 10 µm or more and 300 µm or less.

Further, in the case where the battery has a sheet-like outer casing composed of a resin film, a part of the resin film can also be used for the current collector of the positive electrode. In this case, for example, a positive electrode can be obtained by applying a carbon paste to the surface intended to be the inner surface of the sheet-like outer casing of the resin film to form a current collector, or by using the metal layer of a resin film having a metal layer as a current collector, and forming a positive electrode mixture layer or a catalyst layer on the surface of this current collector in the same manner as described above. The thickness of the aforementioned carbon paste layer is preferably 30 to 300 µm.

The positive electrode typically has a terminal portion for connection to an applicable device. The terminal portion of the positive electrode can be formed by connecting an aluminum foil (plate) or wire, a nickel foil (plate) or wire, or the like to the positive electrode current collector via a lead, or by directly connecting it to the positive electrode current collector. When the positive electrode terminal portion is a foil (plate), the thickness thereof is preferably 50 µm or more and 500 µm or less. Further, when the positive electrode terminal portion is a wire, the diameter is preferably 100 µm or more and 1500 µm or less. Alternatively, a part of the current collector may be exposed to the outside to serve as the positive electrode terminal portion.

### (Separator)

In the battery, a separator is interposed between the positive electrode and the negative electrode. For the separator in the case where the battery is a manganese battery or an air battery, a nonwoven fabric mainly composed of vinylon and rayon, a vinylon-rayon nonwoven fabric (vinylon-rayon mixed paper), a polyamide nonwoven fabric, a polyolefin-rayon nonwoven fabric, vinylon paper, vinylon-linter pulp paper, vinylon-mercerized pulp paper, or the like can be used. Alternatively, a microporous film can also be used, specifically exemplified by a microporous polyolefin film (microporous polyethylene film, microporous polypropylene film, etc.), and the surface thereof may be treated for hydrophilization in order to improve wettability with the aqueous electrolyte.

Further, a laminate of the microporous film, a cellophane film, and a liquidabsorbing layer (electrolyte-retaining layer) such as a vinylon-rayon mixed paper may be used as the separator. For example, the thickness of the separator is preferably 10 to 500 µm, preferably 10 to 50 µm in the case of a microporous film, and preferably 20 to 500 µm in the case of a nonwoven fabric.

### (Battery Form, etc.)

The form of the battery is not particularly limited, and may be any form, such as a flat type (including coin types and button types) having a battery case where an outer can and a sealing plate are, for example, crimp-sealed via a gasket or sealed by welding; a sheet type having a sheet-like outer casing made of a resin film; a cylindrical type [cylindrical, rectangular (rectangular cylindrical)] having a battery case where a bottomed cylindrical outer can and a sealing plate are, for example, crimp-sealed via a gasket or sealed by welding; or the like.

In the case where the battery is used as a power source for medical and health-care devices such as a wearable patch, and particularly for a patch attached to a skin surface for measuring body conditions such as body temperature, pulse rate, and sweat amount, it is preferable to use a sheet-like battery having a sheet-like outer casing made of a resin film.

The sheet-like outer casing is composed of a resin film, and examples of such a resin film include a nylon film (nylon 66 film, etc.) and a polyester film [polyethylene terephthalate (PET) film, etc.].

Note that the sealing of the sheet-like outer casing is typically performed by heat sealing an edge of the upper resin film and an edge of the lower resin film of the sheet-like outer casing, but for the purpose of making the heat sealing easier, a heat-sealable resin layer may be laminated on the exemplified resin film to be used for the sheet-like outer casing. Examples of the heat-sealable resin constituting the heat-sealable resin layer include modified polyolefin films (modified polyolefin ionomer films, etc.), polypropylene, and copolymers thereof. The thickness of the heat-sealable resin layer is preferably 20 to 200 µm.

Further, a metal layer may be laminated on the resin film. The metal layer can be composed of an aluminum film (aluminum foil, including aluminum alloy foil), a stainless steel film (stainless steel foil), or the like. The thickness of the metal layer is preferably 10 to 150 µm.

Furthermore, the resin film constituting the sheet-like outer casing may be a film having a configuration in which the heat-sealable resin layer and the metal layer are laminated.

Further, it is also preferable that the resin film constituting the sheet-like outer casing has an electrically insulating water vapor barrier layer. In this case, the electrically insulating resin film may have a single-layer structure in which the electrically insulating resin film itself also serves as a water vapor barrier layer, or a multi-layer structure having a plurality of electrically insulating resin film layers, at least one of which serves as a water vapor barrier layer, or may have a multi-layer structure having an electrically insulating water vapor barrier layer on a surface of a base layer composed of a resin film.

Among such resin films, one in which a water vapor barrier layer composed of at least an inorganic oxide is formed on a surface of a base layer made of a resin film is preferably used.

Examples of the inorganic oxide constituting the water vapor barrier layer include aluminum oxide and silicon oxide. Note that a water vapor barrier layer composed of silicon oxide tends to have a higher capability of suppressing the permeation of moisture in the electrolyte inside the battery compared to a water vapor barrier layer composed of aluminum oxide. Therefore, it is more preferable to employ silicon oxide as the inorganic oxide constituting the water vapor barrier layer.

The water vapor barrier layer composed of an inorganic oxide can be formed on a surface of a base layer by, for example, a vapor deposition method. The thickness of the water vapor barrier layer is preferably 10 to 300 nm.

Examples of the base layer of the resin film having a water vapor barrier layer include the aforementioned nylon film and polyester film, and a polyolefin film, a polyimide film, a polycarbonate film, and the like can also be used. The thickness of the base layer is preferably 5 to 100 µm.

In the case of a resin film having a water vapor barrier layer and a base layer, a protective layer for protecting the water vapor barrier layer may be formed on a surface of the water vapor barrier layer (the surface on the side opposite to the base layer).

Further, also in the case of a resin film having a water vapor barrier layer and a base layer, the aforementioned heat-sealable resin layer may be further laminated.

The total thickness of the resin film is preferably 10 µm or more from a viewpoint such as providing the battery with sufficient strength, and is preferably 200 µm or less from a viewpoint of suppressing an increase in the thickness of the battery and a decrease in the energy density.

The water vapor transmission rate of the resin film constituting the sheet-like outer casing is preferably 10 g/m²·24h or less. Note that it is desirable that the resin film permeates as little water vapor as possible, that is, the water vapor transmission rate thereof is preferably as low as possible, and may be 0 g/m²·24h.

The water vapor transmission rate of the resin film referred to herein is a value measured in accordance with Method B of JIS K 7129.

Note that in the case where the battery is an air battery, the resin film constituting the sheet-like outer casing preferably has a certain degree of oxygen permeability. Since an air battery is discharged by supplying air (oxygen) to the positive electrode, air holes for introducing oxygen into the battery are formed in a sheet-like outer casing. However, in a case where a resin film constituting the sheet-like outer casing has oxygen permeability, oxygen permeates through the outer casing and is introduced into the battery even from portions other than the air holes of the sheet-like outer casing. Accordingly, oxygen is supplied more uniformly over the entire positive electrode, and the discharge characteristics of the battery can be improved and the discharge time thereof can be prolonged. Further, a sheet-like air battery having no air holes in the sheet-like outer casing can also be realized.

In the case where the battery is an air battery, specifically, the oxygen permeability of the resin film constituting the sheet-like outer casing is preferably 0.02 cm³/m²·24h·MPa or more, and more preferably 0.2 cm³/m ²·24h·MPa or more. However, in the case where the battery is an air battery, if the resin film constituting the sheet-like outer casing permeates too much oxygen, there is a risk that selfdischarge occurs and the capacity thereof is impaired. Therefore, the oxygen permeability of the resin film is preferably 100 cm³/m²·24h·MPa or less, and more preferably 50 cm³/m²·24h·MPa or less.

On the other hand, in the case of a battery other than an air battery, there is no particular restriction on the oxygen permeability of the resin film constituting the sheet-like outer casing. However, from a viewpoint of improving the storage property thereof, a film that does not permeate much oxygen is preferable, and specifically, the oxygen permeability of the resin film is preferably 10 cm³/m²·24h·MPa or less.

The oxygen permeability of the resin film referred to herein is a value measured in accordance with JIS K 7126-2.

Further, in the case of using an outer casing of a crimp-sealed type, materials used in alkaline batteries and the like, such as polypropylene and nylon, can be used for the material of a gasket interposed between the outer can and the sealing plate.

Further, in order to prevent elution of elements such as iron constituting the outer can during charging, it is preferable that the inner surface of the outer can be plated with a corrosion-resistant metal such as tin, zinc, or indium.

In the case where the battery is an air battery, a water-repellent film is typically disposed between the positive electrode and the outer casing. For the water-repellent film, a film that is water-repellent while being capable of permeating air is used. Specific examples of such a water-repellent film include: films composed of resins such as fluororesins like PTFE; polyolefins like polypropylene and polyethylene; and the like. The thickness of the water-repellent film is preferably 50 to 250 µm.

Further, in the case where the battery is an air battery, an air diffusion film for supplying air taken into the outer casing to the positive electrode may be disposed between the outer casing and the water-repellent film. For the air diffusion film, a nonwoven fabric composed of a resin such as cellulose, polyvinyl alcohol, polypropylene, or nylon can be used. The thickness of the air diffusion film is preferably 100 to 250 µm.

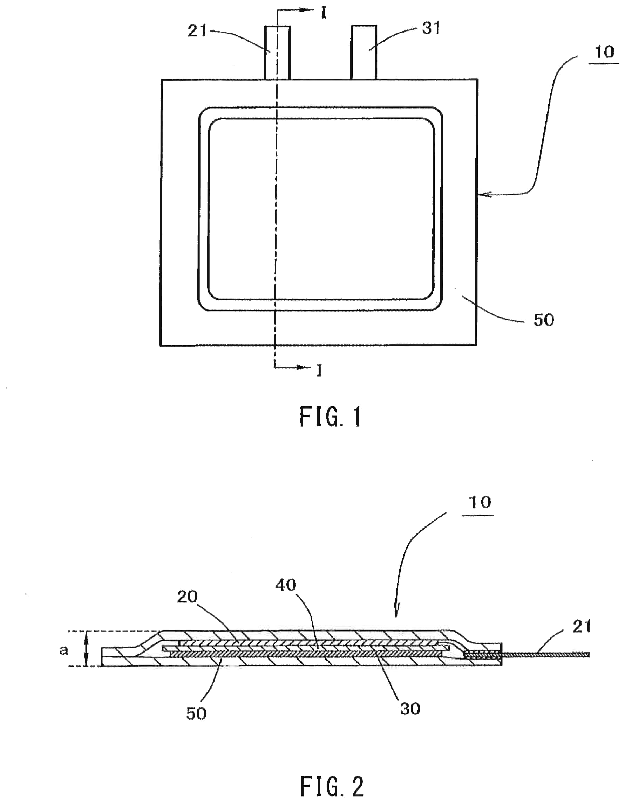

An example of a battery is schematically shown in FIG. 1 and FIG. 2. FIG. 1 and FIG. 2 show an example in the case where the battery includes a negative electrode having a metal sheet and a sheet-like outer casing (in the case of a sheet-like battery). FIG. 1 is a plan view thereof, and FIG. 2 is a cross-sectional view taken along the line I-I in FIG. 1.

As shown in FIG. 2, in a battery 10, a positive electrode 20, a separator 40, and a negative electrode 30, as well as an aqueous electrolyte (not shown) are accommodated in a sheet-like outer casing 50.

From the upper side of the sheet-like outer casing 50 in the figure, a terminal portion 21 of the positive electrode 20 and a terminal portion 31 of the negative electrode 30 protrude. As shown in FIG. 2, the positive electrode terminal portion 21 is connected to the positive electrode 20 inside the battery 10, and although not shown, the negative electrode terminal portion 31 is also connected to the negative electrode 30 inside the battery 10. These terminal portions 21 and 31 are used as external terminals for electrically connecting the battery 10 to an applied device.

Note that FIG. 2 shows the sheet-like outer casing 50 (the resin film constituting the same) as having a single-layer structure, but the resin film constituting the sheet-like outer casing can also have a multilayer structure as described above. Also, in FIG. 2, the positive electrode 10 and the negative electrode 20 are shown as having a single-layer structure, but as described above, the positive electrode and the negative electrode can also have a multilayer structure, and furthermore, the negative electrode can contain metal particles such as zinc particles.

The shape of the sheet-like outer casing may be a polygon ( a triangle, a quadrangle, a pentagon, a hexagon, a heptagon, an octagon, etc.) in a plan view, or a circle or an ellipse in a plan view. Note that, in the case of a sheet-like outer casing that is polygonal in a plan view, the terminal portion of the positive electrode and the terminal portion of the negative electrode may be led out to the outside from the same side, or may be separately led out from different sides.

In the case where the battery is a sheet-like battery, the thickness thereof (the length a in FIG. 2) is not particularly limited and can be appropriately changed depending on the application of the battery. Note that one of the advantages of sheet-like batteries is that they can be made thin, and from such a viewpoint, the thickness thereof is preferably, for example, 1 mm or less. In the case where the battery is a sheet-like air battery, such a thin battery can be particularly easily provided.

Further, while the lower limit of the thickness of the battery is not particularly limited, it is typically preferable that the lower limit is 0.2 mm or more in order to secure a certain capacity.

### Examples

Hereinafter, the present invention will be described in detail based on examples. However, the following examples do not limit the present invention.

### (Example 1)

### <Positive Electrode>

A positive electrode mixture-containing composition was prepared by mixing 87.5 parts by mass of electrolytic manganese dioxide ["SP-A" manufactured by Tosoh Corporation (average particle size 0.5 µm)], 10 parts by mass of graphite ["SP-20" manufactured by Nippon Graphite Industries, Ltd. (average particle size 30 µm)], 2.5 parts by mass of ammonium polyacrylate, and 150 parts by mass of water.

A porous carbon paper [thickness: about 0.2 mm, porosity: 75%, air permeability (Gurley): 70 seconds/100 ml] was stripe-coated with the aforementioned positive electrode mixture-containing composition and dried to obtain a carbon paper having a region [hereinafter referred to as a "region A"] in which the positive electrode active material (positive electrode mixture) is held in the pores and the surface is covered with a layer containing the positive electrode active material (positive electrode mixture layer), and a region [hereinafter referred to as a "region B"] consisting only of carbon paper in which the positive electrode active material is not held in the pores and a layer containing the positive electrode active material is not formed on the surface. This was punched out into a shape having a main body portion consisting of the region A with a size of 15 mm × 15 mm and holding the positive electrode active material, and a positive electrode terminal consisting of the region B with a size of 10 mm × 20 mm, to produce a positive electrode having a theoretical capacity of 36 mAh.

### <Negative Electrode>

An electrolytic zinc alloy foil (thickness: 0.03 mm) composed of a zinc alloy containing 0.05 mass% of Bi as an additive element and not containing In was punched out into a shape having a main body portion with a size of 15 mm × 15 mm and a negative electrode terminal with a size of 10 mm × 20 mm, to produce a negative electrode.

### <Electrolyte>

For the electrolyte, an aqueous solution containing LiCl at a concentration of 16.7 mass% was used.

### <Separator>

For the separator, a polypropylene nonwoven fabric film (thickness: 50 µm, basis weight: 12 g/m²) whose surface had been treated for hydrophilization was used.

### <Sheet-Like Outer Casing>

A sheet-like outer casing was formed by using two sheets of an aluminum laminate film [thickness: 65 µm, size: 25 mm × 30 mm] having a PET film on the outer surface of an aluminum foil and a polypropylene film as a heat-sealable resin layer on the inner surface thereof.

### <Assembly of Battery>

The positive electrode, the separator, and the negative electrode were stacked in this order on one of the aluminum laminate films, and the other aluminum laminate film was further placed thereon. Next, three peripheral sides of the two aluminum laminate films were heat-sealed to each other to form a pouch, and after 0.12 ml of the electrolyte was injected through an opening thereof, the opening was heat-sealed, thereby producing a sheet-like battery having the same structure as that shown in FIGS. 1 and 2.

### Examples 2 to 5

The sheet-like batteries of Examples 2 to 5 were produced in the same manner as in Example 1, except that the concentration of LiCl in the electrolyte was changed to 23.1 mass%, 28.6 mass%, 33.3 mass%, and 37.5 mass%, respectively.

### Comparative Example 1

A sheet-like battery was produced in the same manner as in Example 1, except that the concentration of LiCl in the electrolyte was changed to 9.1 mass%.

### Comparative Example 2

A sheet-like battery was produced in the same manner as in Example 1, except that an aqueous solution containing ammonium chloride at a concentration of 25 mass% was used as the electrolyte.

### Comparative Example 3

A sheet-like battery was produced in the same manner as in Example 1, except that an aqueous solution containing zinc chloride at a concentration of 25 mass% was used as the electrolyte.

The compositions of the aqueous electrolytes used in the sheet-like batteries of Examples and Comparative Examples are shown in Table 1.

**[Table 1]**

| | Electrolyte salt | |
|---|---|---|
| | Type | Concentration (mass%) |
| Example 1 | LiCl | 16.7 |
| Example 2 | LiCl | 23.1 |
| Example 3 | LiCl | 28.6 |
| Example 4 | LiCl | 33.3 |
| Example 5 | LiCl | 37.5 |
| Comparative Example 1 | LiCl | 9.1 |
| Comparative Example 2 | Ammonium chloride | 25 |
| Comparative Example 3 | Zinc chloride | 25 |

For the sheet-like batteries of Examples 1 and 3 to 5 and Comparative Examples 1 to 3, pulse discharge tests were performed under the following conditions after the batteries were allowed to stand in a constant temperature chamber at -40°C for 2 hours, to evaluate the discharge characteristics of the batteries in an initial state at -40°C.

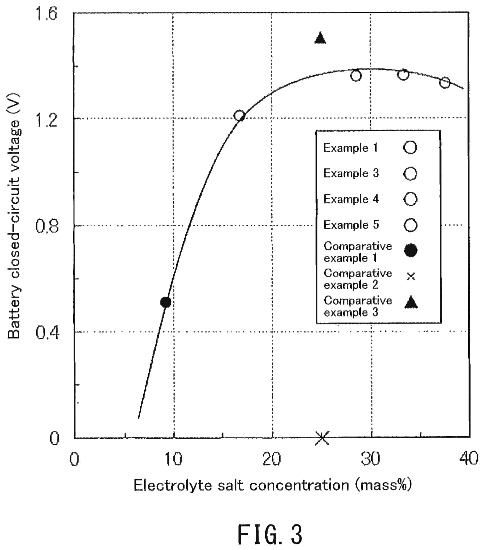

Pulse discharge was performed 10 times under the conditions of a pulse width of 10 msec, a pulse interval of 3 sec, and a pulse current of 1 mA, and the resulting closed-circuit voltage (CCV) was measured. The results are shown in FIG. 3.

Further, separately from the above, the sheet-like batteries of Examples 1 to 5 were discharged at a constant current of 0.5 mA for 60 hours at a temperature of 20°C to reach a state in which the depth of discharge was 83%. For each of the sheet-like batteries in the discharged state, a pulse discharge test was performed under the following conditions after the batteries were allowed to stand in a constant temperature chamber at -40°C for 2 hours.

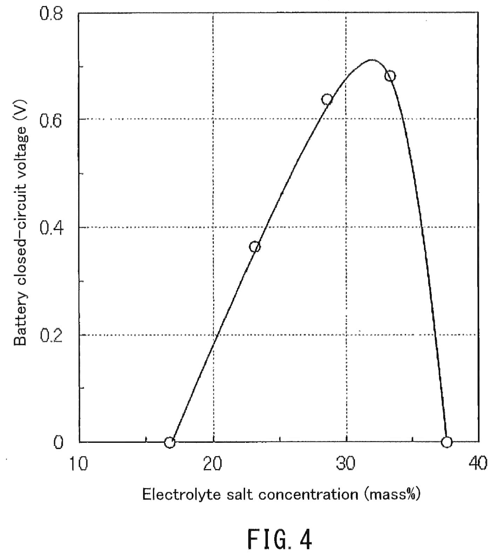

Pulse discharge was performed 10 times under the conditions of a pulse width of 10 msec, a pulse interval of 3 sec, and a pulse current of 10 mA, and the resulting closed-circuit voltage (CCV) was measured. The results are shown in FIG. 4.

As shown in FIG. 3, the sheet-like batteries of Examples 1 and 3 to 5 having aqueous electrolytes containing LiCl at or above a certain concentration had high CCVs when evaluated for the low-temperature discharge characteristics, and exhibited excellent low-temperature characteristics close to those of the sheet-like battery of Comparative Example 3 having an aqueous electrolyte using zinc chloride. In particular, as shown in FIG. 4, it can be seen that more excellent low-temperature characteristics are obtained when the concentration of LiCl in the aqueous electrolyte is 20 mass% or more and 35 mass% or less.

### Example 6

A sheet-like battery was produced in the same manner as in Example 1, except that the concentration of LiCl in the electrolyte was changed to 33.6 mass%, the shape of the positive electrode was changed to a shape having a body portion that holds a positive electrode active material and is composed of the region A with a size of 15 mm × 15 mm, and a positive electrode terminal composed of the region B with a size of 5 mm × 12 mm, and the negative electrode was changed to one produced by punching an electrolytic zinc alloy foil (thickness: 0.05 mm) composed of a zinc alloy containing 0.05 mass% of Bi as an additive element and not containing In into a shape having a body portion with a size of 15 mm × 15 mm and a negative electrode terminal with a size of 5 mm × 12 mm.

### Example 7

A sheet-like battery was produced in the same manner as in Example 6, except that the electrolyte was changed to an aqueous solution containing LiCl at a concentration of 33.6 mass% and ammonium chloride at a concentration of 2.7 mass%.

### Example 8

A sheet-like battery was produced in the same manner as in Example 6, except that the electrolyte was changed to an aqueous solution containing LiCl at a concentration of 33.6 mass% and ammonium chloride at a concentration of 5.3 mass%.

Pulse discharge tests were performed on the sheet-like batteries of Examples 6 to 8 under the following conditions. Pulse discharge was performed 10 times at room temperature (25°C) under conditions of a pulse width of 10 msec, a pulse interval of 3 sec, and a pulse current of 40 mA, and the resulting closed-circuit voltage (CCV) and open-circuit voltage (OCV) were measured. These results are shown in Table 2.

**[Table 2]**

| | Concentration of electrolyte salt in aqueous electrolyte (mass%) | | Evaluation of sheet-like battery | |
|---|---|---|---|---|
| | LiCl | Ammonium chloride | OCV (V) | CCV (V) |
| Example 6 | 33.6 | 0 | 1.609 | 1.329 |
| Example 7 | 33.6 | 2.7 | 1.613 | 1.334 |
| Example 8 | 33.6 | 5.3 | 1.619 | 1.340 |

As shown in Table 2, the sheet-like batteries of Examples 7 and 8 having aqueous electrolytes containing ammonium chloride together with LiCl had higher OCV and CCV values than those of the sheet-like battery of Example 6 using an aqueous electrolyte containing only LiCl as an electrolyte salt, and exhibited more excellent discharge characteristics at room temperature.

The present invention can be implemented in forms other than those described above without departing from the point thereof. The embodiments disclosed in the present application are examples, and the present invention is not limited to these embodiments. The scope of the present invention is to be interpreted with priority given to the recitation in the appended claims over the above description in the specification, and all modifications within the range of equivalents to the claims are included in the scope of the claims.

### Industrial Applicability

The battery according to the present invention has a low environmental load because the electrolyte is an aqueous solution and substantially contains no heavy metal elements. Furthermore, even if the electrolyte leaks out and adheres to the human body due to damage or the like, problems are unlikely to occur. Therefore, the battery according to the present invention is suitable as a power source for medical and healthcare devices, such as body-worn patches, and in particular, patches attached to the skin surface to measure body conditions such as body temperature, pulse, and perspiration volume. Further, the battery can also be applied to the same applications as those in which conventionally known batteries having aqueous electrolytes, such as air batteries and manganese batteries, are employed.

### Description of Reference Numerals

- 10: Battery
- 20: Positive Electrode
- 21: Positive Electrode Terminal Portion
- 30: Negative Electrode
- 31: Negative Electrode Terminal Portion
- 40: Separator
- 50: Sheet-Like Outer Casing

## Claims

1. A battery comprising a positive electrode, a negative electrode, and an electrolyte,
wherein the electrolyte is an aqueous solution containing at least LiCl as an electrolyte salt, and
a concentration of LiCl in the aqueous solution is 16 mass% or more.

2. The battery according to claim 1, wherein the concentration of LiCl in the electrolyte is 35 mass% or less.

3. The battery according to claim 1, wherein the electrolyte further contains an electrolyte salt other than LiCl.

4. The battery according to claim 3, wherein the electrolyte contains at least one electrolyte salt selected from the group consisting of ammonium chloride, zinc chloride, an alkali metal hydroxide, and an alkaline earth metal hydroxide, as the electrolyte salt other than LiCl.

5. The battery according to claim 1, wherein the amount of LiCl is 50 parts by mass or more based on 100 parts by mass of a total amount of electrolyte salts contained in the electrolyte.

6. The battery according to claim 5,
wherein the electrolyte further contains ammonium chloride as the electrolyte salt other than LiCl, and
the amount of ammonium chloride is 0.5 parts by mass or more based on 100 parts by mass of the total amount of electrolyte salts contained in the electrolyte.

7. The battery according to claim 6, wherein the amount of ammonium chloride is 20 parts by mass or less based on 100 parts by mass of the total amount of electrolyte salts contained in the electrolyte.

8. The battery according to claim 1, wherein the negative electrode contains at least one metal selected from the group consisting of zinc, aluminum, magnesium, and alloys thereof as an active material.

9. The battery according to claim 8, wherein the negative electrode includes a zinc foil or a zinc alloy foil.

10. The battery according to claim 1, wherein the positive electrode contains manganese dioxide or silver oxide as an active material.
